(19) Europäisches Patentamt
European Patent Office
Office européen des brevets

(11) **EP 2 896 544 A2**

(12) **EUROPÄISCHE PATENTANMELDUNG**

(43) Veröffentlichungstag:
**22.07.2015 Patentblatt 2015/30**

(51) Int Cl.:
**B60W 40/13** (2012.01)

(21) Anmeldenummer: **14192963.8**

(22) Anmeldetag: **13.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **15.01.2014 DE 102014200557**

(71) Anmelder: **Siemens Aktiengesellschaft**
**80333 München (DE)**

(72) Erfinder:
• **Spiegelberg, Gernot**
  **93077 Bad Abbach (DE)**
• **Moser, Tilo**
  **81667 München (DE)**

(54) **Verfahren zum Ermitteln der Fahrzeugmasse oder des Fahrzeuggewichts eines Elektrofahrzeugs oder eines Elektrohybridfahrzeuges, Vorrichtung und Fahrzeug**

(57) Erläutert wird ein Verfahren zum Ermitteln der Fahrzeugmasse (m) oder des Fahrzeuggewichts eines Elektrofahrzeugs (14, 14b) oder eines Elektrohybridfahrzeugs,

a) wobei das Motordrehmoment (M) eines Elektromotors (EM, EMb) ermittelt wird,

b) wobei eine Beschleunigung (a) des Fahrzeugs (14, 14b) und/oder ein Neigungswinkel (16, alpha) oder eine Neigung des Fahrzeugs (14, 14b) oder der Fahrbahn (12, 12b), auf der das Fahrzeug (14, 14b) fährt, ermittelt wird, und

c) wobei unter Verwendung des Motordrehmoments (M), der Beschleunigung (a) und des Neigungswinkels (16, alpha) oder der Neigung,

oder unter Verwendung des Motordrehmoments (M) und der Beschleunigung (a),

oder unter Verwendung des Motordrehmoments (M) und des Neigungswinkels (16, alpha) oder der Neigung

die Fahrzeugmasse (m) oder das Fahrzeuggewicht ermittelt wird.

FIG 1

EP 2 896 544 A2

**Beschreibung**

Die Erfindung bezieht sich auf das Ermitteln der Fahrzeugmasse oder des Fahrzeuggewichts in einem Fahrzeug, insbesondere in einem Elektrofahrzeug oder in einem Elektrohybridfahrzeug. Diese Fahrzeuge können bspw. über Akkumulatoren oder Brennstoffzellen angetrieben werden und finden ein weite Verbreitung auf Grund des im Vergleich zu Verbrennungsmotoren geringeren Schadstoffausstoßes und der besseren Klimaverträglichkeit bzw. besseren Umweltverträglichkeit beim Betreiben mit alternativen Energien.

Die Erfindung betrifft ein Verfahren zum Ermitteln der Fahrzeugmasse oder des Fahrzeuggewichts eines Elektrofahrzeugs oder eines Elektrohybridfahrzeugs,

a) wobei das Motordrehmoment eines Elektromotors ermittelt wird,
b) wobei eine Beschleunigung und/oder ein Neigungswinkel bzw. eine Neigung des Fahrzeugs oder der Fahrbahn, auf der das Fahrzeug fährt, ermittelt wird, und
c) wobei unter Verwendung des Motordrehmoments, der Beschleunigung und des Neigungswinkels bzw. der Neigung,

oder unter Verwendung des Motordrehmoments und der Beschleunigung,
oder unter Verwendung des Motordrehmoments und des Neigungswinkels bzw. der Neigung
die Fahrzeugmasse oder das Fahrzeuggewicht ermittelt wird.

Die Erfindung betrifft außerdem eine Vorrichtung, insbesondere zum Durchführen des oben genannten Verfahrens, wobei die Vorrichtung enthält:

eine Einheit zum Ermitteln des Drehmoments eines Elektromotors,
eine Einheit zum Ermitteln der Beschleunigung und/oder des Neigungswinkels eines durch den Elektromotor angetriebenen Fahrzeugs,
und eine Ermittlungseinheit, die eingangsseitig mit einem Ausgang der Einheit zur Ermittlung des Drehmoments und

a) mit der Einheit zum Ermitteln der Beschleunigung und des Neigungswinkels, oder
b) mit der Einheit zum Ermitteln der Beschleunigung, oder
c) mit der Einheit zum Ermitteln des Neigungswinkels bzw. der prozentualen Neigung

verbunden ist und die die Fahrzeugmasse oder das Fahrzeuggewicht des Fahrzeugs ermittelt.

Weiterhin betrifft die Erfindung ein Fahrzeug mit einem Elektromotor, wobei das Fahrzeug die oben genannte Vorrichtung enthält.

Es ist Aufgabe von Weiterbildungen ein einfaches Verfahren zum Ermitteln der Fahrzeugmasse oder des Fahrzeuggewichts eines Elektrofahrzeugs oder eines Elektrohybridfahrzeugs anzugeben. Außerdem sollen eine zugehörige Vorrichtung und ein zugehöriges Verfahren angegeben werden.

Die auf das Verfahren bezogene Aufgabe wird durch die im Anspruch 1 angegebenen Verfahrensschritte gelöst. Weiterbildungen sind in den Unteransprüchen angegeben. Die auf die Vorrichtung bzw. auf das Fahrzeug gerichteten Aufgaben werden durch die nebengeordneten Ansprüche gelöst.

Eine Weiterbildung geht von der Überlegung aus, dass es bei den bisher verwendeten Verbrennungsmotoren vergleichsweise schwierig war, das wirksame Motordrehmoment insbesondere bei kleinen Drehzahlen bzw. kleinen Geschwindigkeiten exakt zu bestimmen. Das liegt zum einen daran, dass Verbrennungsmotoren keine kleinen Drehzahlen zulassen, so dass immer Kupplungen erforderlich sind. Elektromotoren haben dagegen auch bei kleinen Drehzahlen bzw. sogar im Stillstand des Elektromotors ein hohes Drehmoment, so dass keine Kupplung erforderlich ist. Darüber hinaus ist bei Elektromotoren das Drehmoment des Motors oft bereits in einem Inverter oder in einer Ansteuerschaltung bzw. Regelschaltung des Elektromotors bekannt, siehe bspw. marktgängige Inverter der Firmen Siemens AG, Bosch GmbH, Brusa Elektronik AG oder anderer Firmen.

Das Drehmoment des Elektromotors ist demzufolge auf einfache Art verfügbar bzw. kann auf einfache Art aus dem Strom zum Antrieb des Elektromotors ermittelt werden. Dies eröffnet bspw. die Möglichkeit, das Fahrzeuggewicht auf einfache Art aus dem Motordrehmoment zu ermitteln bzw. zu berechnen.

Bei einem Verfahren zum Ermitteln der Fahrzeugmasse oder des Fahrzeuggewichts eines Elektrofahrzeugs oder eines Elektrohybridfahrzeuges kann:

a) das Motordrehmoment eines Elektromotors ermittelt werden,
b) eine Beschleunigung und/oder ein Neigungswinkel oder eine Neigung des Fahrzeugs oder der Fahrbahn, auf der das Fahrzeug fährt, ermittelt werden,
c) und unter Verwendung des Motordrehmoments, der Beschleunigung und des Neigungswinkels/Neigung,

oder unter Verwendung des Motordrehmoments und der Beschleunigung,

oder unter Verwendung des Motordrehmoments und des Neigungswinkels/Neigung

kann die Fahrzeugmasse oder das Fahrzeuggewicht ermittelt werden.

Neben den genannten Verfahrensschritten können noch weitere Schritte durchgeführt werden oder es werden nur die genannten Verfahrensschritte zum Ermitteln der Fahrzeugmasse bzw. des Fahrzeuggewichts durchgeführt.

Das Elektrofahrzeug kann z.B. ein Auto, ein Bus, ein Nutzfahrzeug, ein Schienenfahrzeug, ein Motorrad, ein Motorroller, ein Fahrrad oder ein anderes Fahrzeug sein. Insbesondere kann das Elektrofahrzeug auch ein Hybridfahrzeug sein, d.h. durch einen Elektromotor und einen weiteren Antrieb angetrieben werden.

Das Motordrehmoment kann auf verschiedene Arten ermittelt werden, z.B. vorgegeben, erfasst, gemessen, insbesondere in SI-Einheiten (System International).

Die erwähnte Beschleunigung kann positiv oder auch negativ sein, d.h. eine Verzögerung. Die Beschleunigung kann bspw. durch Erfassen, durch Messen oder auf andere Art und Weise ermittelt werden. Viele Elektromotoren enthalten einen oder mehrere Sensoren, die die Ermittlung der Rotorposition, der Rotorgeschwindigkeit oder der Rotorbeschleunigung ermöglichen. Die Rotorbeschleunigung kann zu der Fahrzeugbeschleunigung proportional sein. Auch vom Motor separate Beschleunigungssensoren können verwendet werden.

Die Masse wird in der Alltagssprache oft als Gewicht bezeichnet. Die Masse hat die physikalische Einheit Kilogramm. Das Gewicht hat die physikalische Einheit Newtonmeter (früher Kilopond) und berechnet sich aus der Masse durch Multiplikation mit der jeweils geltenden Erdfallbeschleunigung g, die bspw. 9,81 m/s^2 (Meter pro Quadratsekunde) beträgt. Die Erdfallbeschleunigung g hängt bspw. von der Höhe über Normalnull ab, d.h. einer Höhe die bspw. auf Meeresspiegelniveau liegt. Alternativ kann ein konstanter Wert für die Erdfallbeschleunigung verwendet werden.

Die Fahrzeugmasse bzw. das Fahrzeuggewicht verändert sich bspw. abhängig von der Beladung des Fahrzeugs mit Gepäck, Ladegut, Personen usw. Auch beim Anhängen eines Anhängers verändert sich das Fahrzeuggewicht. Hybridfahrzeuge verändern ihr Gewicht bzw. ihre Masse auch während des Fahrens abhängig vom noch verbleibenden Treibstoff. So hat eine Kraftstofffüllung bei einem Hybridauto eine Masse, die bspw. im Bereich von 50 Kilogramm bei Autos bis zu mehr als 200 Kilogramm bei Lastern oder Bussen liegt.

Die Fahrzeugmasse bzw. das Fahrzeuggewicht können sich auf die gesamte Fahrzeugmasse bzw. das gesamte Fahrzeuggewicht beziehen, d.h. Fahrzeug plus Zuladung, bspw. insbesondere Personen und Gepäck oder andere Lasten, und ggf. Anhänger.

Der Elektromotor kann ein beliebiger Elektromotor sein, z.B. ein bürstenloser Motor oder ein Gleichspannungsmotor mit Bürsten, z.B. Kohlebürsten.

Das Fahrzeuggewicht kann für viele Zwecke verwendet werden, z.B. zum Ermitteln der Reichweite des Elektrofahrzeugs, zum Einstellen eines ABS (Antiblockiersystem) oder ESP (Elektronisches Stabilisierungsprogramm) oder für andere Zwecke. Unten werden bspw. noch weitere Zwecke genannt.

Die Beschleunigung des Fahrzeugs kann bspw. mit einem Beschleunigungssensor erfasst werden, der bspw. auf der Basis eines Hallsensors funktioniert und sich insbesondere nicht in dem Elektromotor zum Antrieb des Fahrzeugs befindet. Alternativ kann, wie oben erwähnt, die Beschleunigung auch aus einer Rotorbeschleunigung des Rotors des Elektromotors ermittelt werden oder auf andere Art und Weise.

Der Neigungswinkel bzw. die Neigung können ebenfalls erfasst oder gemessen werden. Der Neigungswinkel wird bspw. in Winkelgrad oder in Radiant angegeben. Die Neigung einer Fahrbahn bzw. eines Fahrzeuges kann bspw. in Prozent angegeben werden. So kann als Bezugsgröße die prozentuale Neigung der Fahrbahn auf 100 Meter oder die prozentuale Neigung des Fahrzeugs auf seine Länge bezogen werden. Ein gleichmäßiger Anstieg um 10 Meter auf 100 Meter ist bspw. gleich einer Steigung von 10 Prozent.

Das Motordrehmoment des Elektromotors kann von einem Inverter zum Ansteuern des Elektromotors ausgegeben werden. Alternativ oder zusätzlich kann das Motordrehmoment des Elektromotors aus mindestens einem Motorstrom ermittelt werden, vorzugsweise aus einem Motorstrom, der bzw. dessen Wert in einem Inverter zum Ansteuern des Elektromotors verfügbar ist.

Ein Inverter kann bspw. mindestens drei Halbbrücken aus jeweils zwei Schaltelementen enthalten, insbesondere Leistungshalbleiter (Transistor), sowie eine zugehörige Ansteuerung. Der Inverter kann auch als Umrichter bezeichnet werden.

Das Motordrehmoment kann aber bspw. auch in einer Regelung berechnet werden, insbesondere in einem in einer Regelung verwendeten Maschinenmodell eines Elektromotors.

Der Motorstrom kann bspw. erfasst, gemessen oder auf andere Art ermittelt werden.

Somit lässt sich das Drehmoment des Elektromotors auf einfache Art und Weise ohne elektromechanische Drehmomentenerfassung ermitteln. Alternativ kann jedoch auch eine elektromechanische Drehmomentenerfassung erfolgen.

Der Elektromotor kann ein Synchronmotor, insbesondere ein permanenterregter Synchronmotor, sein. Ein solcher Motor hat keinen Schlupf, so dass das bekannte Ständermagnetfeld bzw. Statormagnetfeld eine synchrone Drehung am Rotor erzeugt. Alternativ ist der Motor ein Asynchronmotor oder ein Gleichstrommotor.

Der Synchronmotor baut besonders kompakt. Der Asynchronmotor kann ohne seltene Erden für Permanentmagnete gebaut werden. Ein Gleichstrommotor kann z.B. im Reihenschluss ohne aufwändige Regelung betrieben werden.

Aber auch andere Arten von Elektromotoren können verwendet werden, z.B. ein Reluktanzmotor. Der Elektromotor kann ein Innenläufer sein, insbesondere bei Radnabenmotoren werden aber auch Außenläufermotoren verwendet.

Die Fahrzeugmasse oder das Fahrzeuggewicht kann abhängig von den folgenden Größen berechnet werden:

- dem Motordrehmoment,
- vorzugsweise einem Übersetzungsverhältnis eines Getriebes, wobei bei einem Radnabenmotor vorzugsweise ein Übersetzungsverhältnis gleich 1 verwendet wird,
- einem Radius eines Rades des Fahrzeugs,
- vorzugsweise der Erdfallbeschleunigung,
- der Beschleunigung des Fahrzeugs, und,
- dem Neigungswinkel.

Die genannten Größen können die zur Ermittlung der Fahrzeugmasse oder des Fahrzeuggewichts verwendeten Größen vollständig beschreiben. Alternativ können auch weitere physikalische Größen verwendet werden.

Bei der Verwendung eines Getriebes zwischen dem Elektromotor und dem Antriebsrad kann die Übersetzung ungleich eins sein, z.B. im Bereich von zwei bis 15 bzw. von zwei bis zehn. Wird kein Getriebe verwendet, ist ü gleich eins.

Die genannten Größen dienen zur Darstellung der physikalischen Zusammenhänge bei der Drehmomentübertragung vom Elektromotor auf die Straße, wobei Gegenkräfte wie eine Hangabtriebskraft oder eine Trägheitskraft auf einfache Art berücksichtigt werden können. Das Berücksichtigen dieser beiden Kräfte ist in vielen Fahrsituationen bzw. im Stillstand ausreichend bei der Bestimmung des Fahrzeuggewichts oder der Fahrzeugmasse.

Die Fahrzeugmasse kann nach der folgenden Formel berechnet werden:

m = M * ü / (r * a (g/a * sin alpha + 1)), Formel (1) wobei M das Motordrehmoment, ü das Übersetzungsverhältnis, r der Radius, g die Erdfallbeschleunigung, a die Beschleunigung und alpha der Neigungswinkel sind. Hierbei steht das Symbol * für eine Multiplikation und das Symbol / für eine Division.
Die Sinusfunktion wird durch sin bezeichnet.

Es kann auch eine der Formel (1) entsprechende Formel verwendet werden, die sich in die oben genannte Formel (1) umformen lässt, bspw. unter Verwendung des Assoziativgesetzes der Multiplikation:

```
m = M * ü / (r * (a + g * sin alpha)).
```

In der Formel (1) ist bspw. berücksichtigt, dass das Raddrehmoment gleich der benötigten Kraft mal dem Radius des Rades ist. Außerdem ist berücksichtigt, dass das Motordrehmoment gleich dem benötigten Raddrehmoment geteilt durch die Übersetzung des Getriebes ist.

Das Motordrehmoment ist bspw. bei einem Zentralmotor auf einen einzigen Elektromotor bezogen. Bei einem Radnabenantrieb kann es die Summe der Drehmomente von zwei Radnabenmotoren oder von vier oder mehr als vier Radnabenmotoren sein. Demzufolge kann abhängig vom Antriebskonzept die Anzahl der Motoren im Drehmoment berücksichtigt sein.

Die Erdfallbeschleunigung kann vorzugsweise fest oder aber auch variabel vorgegeben werden, bspw. über eine Geländehöheinformation, bspw. unter Verwendung von GPS (Global Position System) oder einem entsprechenden System, wie es bspw. in Russland oder in anderen Ländern oder Regionen verwendet wird.

Es kann auch eine Normierung in der Formel (1) verwendet werden, wobei die festen Größen in einem Normierungsfaktor enthalten sein können. Die Fahrzeugmasse bzw. das Fahrzeuggewicht wird dann bspw. bezogen auf eine Bezugsmasse oder ein Bezugsgewicht des Fahrzeuges angegeben.

Die Fahrzeugmasse oder das Fahrzeuggewicht kann abhängig von den folgenden Größen berechnet wird:

- dem Motordrehmoment,
- vorzugsweise einem Übersetzungsverhältnis eines Getriebes, wobei bei einem Radnabenmotor vorzugsweise ein Übersetzungsverhältnis gleich 1 verwendet wird,
- einem Radius eines Rades des Fahrzeugs, und
- der Beschleunigung des Fahrzeugs.

Ein Neigungswinkel sowie die Erdfallbeschleunigung werden nicht verwendet. Die genannten Größen können die verwendeten Größen vollständig beschreiben. Alternativ können auch weitere physikalische Größen verwendet werden.

Bei einem Getriebe kann die Übersetzung wieder ungleich eins sein und z.B. im Bereich von zwei bis 15 bzw. von zwei bis zehn liegen. Wird kein Getriebe verwendet, ist ü gleich eins.

Ohne die Berücksichtigung von Neigungswinkel/Neigung kann die Fahrzeugmasse bzw. das Fahrzeuggewicht dennoch hinreichend genau berechnet werden, insbesondere auf einer ebenen Fahrbahn, d.h. kein Gefälle/Steigung, oder bei leichtem Gefälle/Steigung, d.h. bspw. kleiner als 3 Prozent oder sogar kleiner als 1 Prozent.

Die Fahrzeugmasse kann nach der folgenden Formel berechnet werden:

$$m = M * ü / (r * a), \hspace{4cm} \text{Formel (2)}$$

wobei M das Motordrehmoment, ü das Übersetzungsverhältnis, r der Radius und a die Beschleunigung sind. Es kann geprüft werden, ob bzw. dass sich das Fahrzeug auf einer ebenen Fahrbahn (keine Steigung/ kein Gefälle) oder auf einer Fahrbahn mit einer Steigung oder mit einem Gefälle kleiner als drei Prozent oder kleiner als 1 Prozent bewegt.

Bspw. wird mit einem Sensor im Fahrzeug erfasst, dass kein Gefälle/Steigung oder nur eine geringe Neigung vorliegt. Bei Rückführung auf SI-Einheiten wird auch von Messen gesprochen. Alternativ kann über GPS oder ein vergleichbares System und bspw. elektronische Straßenkarten geprüft werden, ob aktuell eine Neigung vorliegt. Die Prüfung kann aber auch auf andere Art und Weise durchgeführt werden.

Das Raddrehmoment ist wieder gleich der benötigten Kraft mal dem Radius des Rades. Das Motordrehmoment ist wieder gleich dem benötigten Raddrehmoment geteilt durch die Übersetzung. Aber auch weitere oder andere Zusammenhänge können in der Formel (2) berücksichtigt sein.

Das Motordrehmoment kann auf einen einzigen Elektromotor bspw. bei einem Zentralmotor bezogen werden. Bei einem Radnabenantrieb ist das Motordrehmoment bspw. die Summe zweier Radnabenmotoren oder von vier oder mehr als vier Radnabenmotoren. Die Anzahl der relevanten Motoren kann bei der Angabe des Drehmoments berücksichtigt werden.

Es kann auch eine Normierung verwendet werden, wobei die festen Größen in einem Normierungsfaktor enthalten sein können. Die Fahrzeugmasse bzw. das Fahrzeuggewicht sind dann auf eine Bezugsmasse oder ein Bezugsgewicht des Fahrzeugs bezogen.

Die Fahrzeugmasse oder das Fahrzeuggewicht können bei einer Fahrzeuggeschwindigkeit im Bereich von einem Kilometer pro Stunde bis zu 1, 5, 10, 20 oder 30 Kilometern pro Stunde oder im Bereich von 5 Kilometern pro Stunde bis zu 30 Kilometer pro Stunde ermittelt werden. Die Geschwindigkeit kann über den Elektromotor erfasst bzw. gemessen werden. Alternativ kann ein Tacho zum Erfassen der Geschwindigkeit des Fahrzeugs verwendet werden, wobei ein Sensorelement des Tachos bspw. an einem Rad montiert ist.

Bei den genannten geringen Geschwindigkeiten tritt noch kein Einfluss bzw. nur ein geringer Einfluss von Rollreibung und/oder Luftwiderstand oder anderen Faktoren auf das Motordrehmoment auf, so dass die oben genannten Zusammenhänge der Formeln (1) bzw. (2) oder andere einfache Zusammenhänge für die Berechnung der Fahrzeugmasse bzw. des Fahrzeuggewichts gelten.

Die Fahrzeugmasse oder das Fahrzeuggewicht können jedoch auch bei einer Fahrzeuggeschwindigkeit größer als 30 Kilometern pro Stunde oder größer als 50 Kilometer pro Stunde ermittelt werden unter Verwendung der oben angegebenen Größen bzw. der Formeln (1) und (2). Bspw. kann die Geschwindigkeit aber kleiner als 70 km/h (Kilometer pro Stunde) oder kleiner als 100 km/h sein. Die Genauigkeit, mit der die Masse bzw. das Gewicht berechnet wird, kann trotz der Verwendung der oben genannten einfachen Zusammenhänge bzw. einfach zu ermittelnden Größen für viele Anwendungen ausreichend sein. Ggf. lassen sich aber auch weitere physikalische Größen einbeziehen, insbesondere die Rollreibung und/oder der Luftwiderstand.

Die Geschwindigkeit kann wieder über den Motor oder über einen am Rad bzw. einer Antriebswelle erfassenden Tacho erfasst bzw. gemessen werden. Auch die Auswertung von GPS Daten oder ähnlicher Zusatzdaten ist möglich.

Die Fahrzeugmasse oder das Fahrzeuggewicht können abhängig von den folgenden Größen ermittelt wird:

- dem Motordrehmoment,
- vorzugsweise einem Übersetzungsverhältnis eines Getriebes, wobei bei einem Radnabenmotor vorzugsweise ein Übersetzungsverhältnis gleich 1 verwendet wird,
- einem Radius eines Rades des Fahrzeugs,
- vorzugsweise der Erdfallbeschleunigung, und
- dem Neigungswinkel.

Somit wird hier keine Beschleunigung benötigt, so dass das Ermitteln der Fahrzeugmasse oder des Fahrzeuggewichts im Stand durchgeführt werden kann, das heißt bei der Geschwindigkeit 0 km/h.

Die Fahrzeugmasse kann nach der folgenden Formel ermittelt werden:

$$m = M * ü / (r * g * \sin alpha), \qquad\qquad Formel\ (3)$$

wobei M das Motordrehmoment, ü das Übersetzungsverhältnis, r der Radius, g die Erdfallbeschleunigung und alpha der Neigungswinkel sind.

Die genannten Größen können die verwendeten Zusammenhänge vollständig beschreiben. Alternativ können auch weitere physikalische Größen verwendet werden. Es handelt sich wieder um einen einfachen physikalischen Zusammenhang.

Bei Verwendung eines Getriebes ist die Übersetzung ungleich eins, z.B. im Bereich von zwei bis 15 bzw. von zwei bis zehn. Wird kein Getriebe verwendet, ist ü gleich eins.

Das Raddrehmoment ist bspw. gleich benötigte Kraft mal dem Radius des Rades, was schon in der Formel (3) berücksichtigt ist. Das Motordrehmoment ist gleich dem benötigten Raddrehmoment geteilt durch die Übersetzung, was ebenfalls in der Formel (3) berücksichtigt ist.

Das Motordrehmoment kann wieder bezogen werden auf nur einen Elektromotor bspw. bei einem Zentralmotor. Bei einem Radnabenantrieb ist das Motordrehmoment bspw. bezogen auf zwei Radnabenmotoren oder auf vier oder mehr als vier Radnabenmotoren, d.h. es kann die Summe von Drehmomenten gebildet werden. Die Anzahl der relevanten Motoren kann im Motordrehmoment berücksichtigt sein.

Die Erdfallbeschleunigung kann vorzugsweise fest oder aber auch variabel vorgegeben werden, bspw. über eine Geländehöheinformation, bspw. unter Verwendung von GPS (Global Position System) oder einem entsprechenden System, wie es bspw. in Russland oder in anderen Ländern oder Regionen verwendet wird.

Es kann auch eine Normierung verwendet werden, wobei die festen Größen in einem Normierungsfaktor enthalten sein können.

Der Neigungswinkel lässt sich mit einem Sensor oder unter Bestimmung des aktuellen Ortes und ggf. dafür vorhandener Zusatzdaten ermitteln.

Die Fahrzeugmasse oder das Fahrzeuggewicht kann bei Stillstand des Fahrzeugs an einer Steigung oder an einem Gefälle gemessen werden, wobei die Neigung einen Betrag hat, der vorzugsweise größer als 1 Prozent, größer als 3 Prozent oder größer als 5 Prozent ist. Alternativ kann auf einen zugehörigen Neigungswinkel Bezug genommen werden.

Die Neigung ist aber bspw. kleiner als 30 Prozent oder kleiner als 20 Prozent. Alternativ kann auf einen zugehörigen Neigungswinkel Bezug genommen werden.

Damit kann bspw. eine in einem Fahrzeug vorhandene Hill-Hold-Funktion (Halten am Berg) oder eine "Handbremsenfunktion" zur Bestimmung des Gewichts bzw. der Masse verwendet werden. Aber auch unabhängig von einer solchen Funktion kann die Fahrzeugmasse bzw. das Fahrzeuggewicht bestimmt werden.

Der Elektromotor kann im Stillstand ein Halten oder Anfahren des Fahrzeugs am Hang durchführen oder unterstützen. Der Elektromotor kann im Stillstand auch eine Bremsfunktion des Fahrzeuges an einem Hang vollständig oder teilweise übernehmen.

Der Mehraufwand für die Bestimmung des Fahrzeuggewichts verringert sich bei der Nutzung von Funktionen, bei denen das Motordrehmoment des Elektromotors im Stillstand zur Erbringung bestimmter anderer Funktionen verwendet wird.

Die Fahrzeugmasse oder das Fahrzeuggewicht kann verwendet werden, um eine, mehrere oder alle der folgenden Maßnahmen durchzuführen:

- Ermitteln der Reichweite des Fahrzeugs,
- Einstellen eines Antiblockiersystems,
- Einstellen einer elektronischen Stabilitätsregelung,
- Einstellen der Scheinwerferlichtkegelhöhe,
- Einstellen der Lenkung,
- Ausgabe eines Warnhinweises an den Fahrer beim Überschreiten eines Höchstwertes der Fahrzeugmasse/-gewicht,
- Begrenzung der Höchstgeschwindigkeit,
- Außerbetriebnahme des Fahrzeugs,
- Verändern der von einem Gaspedal erzeugten Gegenkraft,
- Verändern der von einem Bremspedal erzeugten Gegenkraft,
- Vorgabe eines Solldrehmoments für den Elektromotor,

- Vorgabe einer Solldrehzahl für den Elektromotor.

Die genannten Funktionen können abhängig von der ermittelten Masse bzw. dem ermittelten Gewicht so eingestellt werden, dass sich der Fahrkomfort bzw. die Fahrsicherheit erheblich erhöht.

Eine Vorrichtung kann insbesondere zum Durchführen eines oben genannten Verfahrens verwendet werden. Die Vorrichtung kann Folgendes enthalten:

- eine Einheit zum Ermitteln des Drehmoments eines Elektromotors,
- eine Einheit zum Ermitteln der Beschleunigung und/oder des Neigungswinkels bzw. der Neigung eines durch den Elektromotor angetriebenen Fahrzeugs,
- und eine Ermittlungseinheit, die eingangsseitig mit einem Ausgang der Einheit zur Ermittlung des Drehmoments und

    a) mit der Einheit zum Ermitteln der Beschleunigung und des Neigungswinkels/Neigung, oder
    b) mit der Einheit zum Ermitteln der Beschleunigung, oder
    c) mit der Einheit zum Ermitteln des Neigungswinkels/Neigung verbunden ist und die die Fahrzeugmasse oder das Fahrzeuggewicht des Fahrzeugs ermittelt.

Es gelten die oben für die Verfahren angegebenen technischen Wirkungen auch für die Vorrichtung. Die Vorrichtung kann auch aus den genannten Einheiten bestehen, d.h. sie enthält dann keine weiteren Ermittlungseinheiten. Bspw. kann die Vorrichtung dann aber noch Zusatzeinheiten enthalten, wie eine Spannungsversorgung. Alternativ enthält die Vorrichtung weitere Einheiten, die der Berechnung der Masse bzw. des Gewichts des Fahrzeugs dienen.

Die Vorrichtung kann als elektronische Schaltung ohne Prozessor, der Programmbefehle abarbeitet, als programmierbarer Logikschaltkreis oder auch als Programm in Verbindung mit einem Prozessor ausgeführt werden, der Befehle des Programms ausführt. Aber auch andere Realisierungsformen sind möglich.

Weiterhin kann ein Fahrzeug mit einem Elektromotor die genannte Vorrichtung enthalten. Es gelten die oben für die Verfahren angegebenen technischen Wirkungen.

Das Fahrzeug kann ein Schienenfahrzeug, ein Landfahrzeug, insbesondere ein Auto, ein Laster, ein Bus, aber auch ein Motorrad, ein Moped, ein Fahrrad o.ä. sein. Alle Fahrzeuge können ausschließlich mit Elektroantrieb oder mit Hybridantrieben angetrieben werden, wobei der Elektroantrieb eine Ergänzung zu einer anderen Antriebsart ist oder durch eine oder mehrere andere Antriebsart(en) ergänzt wird, z.B. Verbrennungsmotor, Diesel oder Benzin, Muskelkraft usw.

Die oben genannte Ermittlung der Fahrzeugmasse bzw. des Fahrzeuggewichts kann nicht nur bei Steigungen sondern auch bei einem Gefälle durchgeführt werden.

Weiterhin kann das Verfahren nicht nur beim Beschleunigen des Fahrzeugs auf ebener oder geneigter Strecke durchgeführt werden, sondern auch beim Abbremsen, insbesondere beim Abbremsen unter Verwendung eines Elektromotors, bei dem ebenfalls ein Motordrehmoment bzw. dann ein Elektrogeneratordrehmoment entsteht. Wird beim Abbremsen ein Akku des Elektroautos wieder geladen, d.h. so genanntes Rekuperieren, so kann in einem zwischen dem Elektromotor und dem Akku geschalteten Umrichter bzw. Inverter der Motorstrom bzw. das Motordrehmoment auf einfache Art und Weise aus dem in den Akkus geladenen Generatorstrom ermittelt werden.

Damit können die Betriebsarten bei Bewegung des Fahrzeugs wie folgt systematisiert werden:

|  | Beschleunigen | Bremsen/Rekuperieren |
|---|---|---|
| Steigung | Fall 1 | Fall 2 |
| Gefälle | Fall 3 | Fall 4 |

Die Hill-Hold-Funktion kann insbesondere an Steigungen verwendet werden.

Mit anderen Worten ausgedrückt, wird die Bestimmung des Fahrzeuggewichtes bzw. der Fahrzeugmasse während des Betriebes unter Ausnutzung eines elektrischen Antriebes angegeben.

Für viele Fahrzeugfunktionen ist das Fahrzeuggewicht/-masse eine entscheidende Eingangsgröße. Als Beispiele seien genannt: Fahrzeuggewicht für ABS und ESP. Wünschenswert wäre, das Gewicht/Masse des Fahrzeuges durch unterschiedliche Beladung auch während des Betriebes bestimmen zu können, um damit die Funktionen genauer parametrieren zu können.

Es ist keine Funktion bekannt, die das Fahrzeuggewicht/-masse unter Ausnutzung des elektrischen Antriebes während des Betriebes ermittelt.

Es kann das sehr genau vorliegende Moment bzw. Drehmoment des elektrischen Antriebes während des Anfahrens verwendet werden, um die Fahrzeugmasse bzw. das Fahrzeuggewicht zu bestimmen. Dies ist normalerweise als Rückmeldung des Antriebes genau verfügbar. Beim Verbrennungsmotor ist dies wegen der immer notwendigen Kupplung beim Anfahren (Geschwindigkeit v bspw. kleiner als 10 km/h) nicht genau bestimmbar. Bspw. in Kombination mit einem Neigungssensor und einer Hill-Hold Funktion, kann nun das Fahrzeuggewicht leicht bestimmt werden. Luft- und Rollwiderstand spielen dabei keine Rolle, so dass bspw. nur die Hangabtriebskraft, die Neigung der Straße/des Fahrzeuges und das für die Hill-Hold Funktion notwendige Moment betrachtet werden muss. Eine Hill-Hold Funktion mit dem elektrischen Antrieb ist leicht zu realisieren und als Alternative/Ergänzung zur Hill-Hold Funktion mit der Reibbremse schon häufig verfügbar. Um Energie zu sparen, kann natürlich die Hill-Hold Funktion je nach Mess-Bedarf, d. h. falls es gerade nötig ist, die Masse zu bestimmen, und Ausstattung dann mit der Reibbremse oder dem elektrischen Antrieb realisiert werden. Bspw. würde die Hill-Hold-Funktion nur dann mit dem Elektromotor realisiert werden, wenn man die Fahrzeugmasse ermitteln will. Zu anderen Zeitpunkten wird eine andere Bremse verwendet, um Elektroenergie zu sparen.

Eine Alternative Bestimmung des Fahrzeuggewichtes/Masse ohne Hill-Hold Funktion kann aber auch über die Beschleunigung bei niedrigen Geschwindigkeiten ermittelt werden. Die Beschleunigung lässt sich gut über den ebenfalls vom elektrischen Antrieb in hoher Auflösung (Wert wie zeitlich) vorhandenen Geschwindigkeitswert ableiten. Wieder in Kombination mit einem Neigungssensor kann dann das Fahrzeuggewicht aus dem anliegenden Moment leicht errechnet werden, falls andere Reibungsverluste klein sind, z.B. bei ganz kleinen Geschwindigkeiten. Dies ist der Fall, da die Reibungsverluste Rollwiderstand bzw. Luftreibung proportional zur Geschwindigkeit bzw. zum Quadrat der Geschwindigkeit sind und damit für kleine Geschwindigkeiten gegen Null gehen. Die Beschleunigungswerte bzw. Haltekräfte am Berg hingegen aber von der Geschwindigkeit unabhängig sind und damit im Vergleich unendlich groß werden, d.h. die Haltekraft im Vergleich zu den Rollreibungskräften oder Luftwiderstandskräften, wodurch die Bestimmung des Fahrzeuggewichts bzw. der Fahrzeugmasse genauer möglich ist. Erst dies kann eine genaue Berechnung möglich machen, andernfalls müsste der Rollwiderstand bzw. Luftwiderstand bekannt sein, was aber z.B. wegen verschiedener Bodenbeläge oder Dachaufbauten niemals der Fall ist bzw. erheblichen Aufwand bereitet.

So können die sowieso vorhandenen genauen Drehzahl- bzw. Drehmomentinformationen des elektrischen Antriebes bei Stillstand bzw. ganz kleinen Geschwindigkeiten verwendet werden und diese bspw. mit einem Neigungssensor und optional mit einer Hill-Hold Funktion kombiniert werden. Insbesondere in dem Bereich sehr kleiner Geschwindigkeiten bzw. im Stillstand kann das Fahrzeuggewicht/-masse bequem aus Beschleunigungswerten oder Haltekräften an einer Steigung berechnet werden (siehe oben). Dies kann deshalb nicht mit einem Verbrennungsmotor gemacht werden, da im Bereich Fahrzeugstillstand /sehr kleine Geschwindigkeiten insbesondere keine Drehmomentinformationen vorliegen, u.a. wegen der Kupplung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung. Sofern in dieser Anmeldung der Begriff "etwa" verwendet wird, bedeutet dies, dass auch der exakte Wert offenbart ist.

Die Figuren sind nicht maßstabsgerecht gezeichnet, insbesondere können die Aspektverhältnisse der Elemente anders gewählt werden.

Im Folgenden werden Ausführungsbeispiele der Erfindung an Hand der beiliegenden Zeichnungen erläutert. Darin zeigen:

Figur 1 ein Elektrofahrzeug, bei dem die Fahrzeugmasse während des Beschleunigens an einer Steigung oder auf einer Ebene ermittelt wird,
Figur 2 Verfahrensschritte beim Ermitteln der Fahrzeugmasse des Elektrofahrzeugs,
Figur 3 Einheiten des Elektrofahrzeugs zur Berechnung der Fahrzeugmasse,
Figur 4 ein weiteres Elektrofahrzeug, bei dem die Fahrzeugmasse während des Haltens/Parkens an einer Steigung ermittelt wird,
Figur 5 Verfahrensschritte beim Ermitteln der Fahrzeugmasse des weiteren Elektrofahrzeugs, und
Figur 6 Einheiten des weiteren Elektrofahrzeugs zur Berechnung der Fahrzeugmasse.

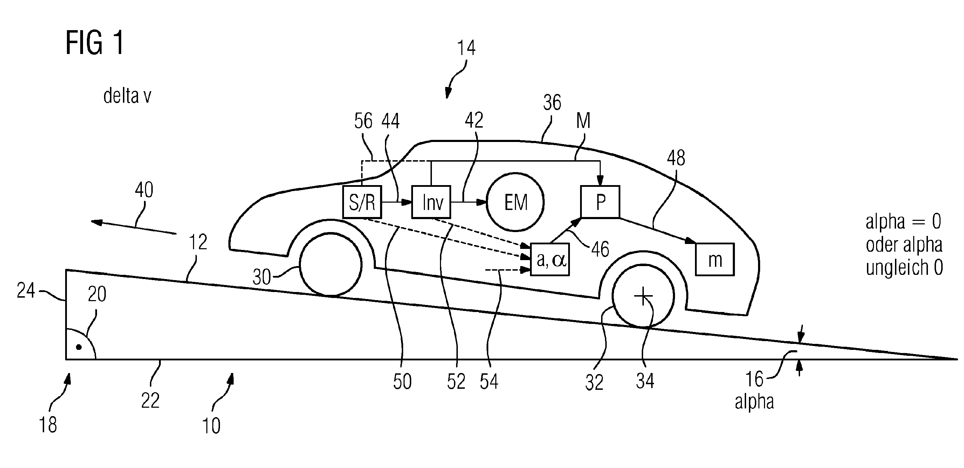

Die Figur 1 zeigt ein Elektrofahrzeug 14, bei dem die Fahrzeugmasse m während des Beschleunigens mit einer Beschleunigung a an einer Steigung 10 oder auf einer Ebene ermittelt wird. Die Steigung 10 tritt an einer Fahrbahn 12 auf und hat zur Horizontalen einen Neigungswinkel 16 bzw. alpha ($\alpha$). Der Neigungswinkel 16 ist durch die Beziehungen an einem rechtwinkligen Dreieck 18 gegeben, das einen rechten Winkel 20 hat. Am rechten Winkel 20 liegen eine Ankathete 22 zum Neigungswinkel 16 bzw. eine Horizontale sowie eine Gegenkathete 24 zum Neigungswinkel 16 bzw. eine Vertikale an. Die Hypotenuse des rechtwinkligen Dreiecks 18 wird durch die Fahrbahn 12 gebildet. Der Neigungswinkel 18 ist demnach der Arcustangens aus der Länge der Gegenkathete 24 dividiert durch die Länge der Ankathete 12. An Stelle des Neigungswinkels 16 kann auch auf die Neigung der Steigung 10 Bezug genommen werden, die in Prozent angegeben werden kann durch Division der Länge der Gegenkathete 24 durch die Länge der Ankathete 12.

Das Auto 14 ist in der Figur 1 schematisch dargestellt und enthält ein in der Figur 1 sichtbares Vorderrad 30 und ein Hinterrad 32. Auf das Hinterrad 32 wirkt ein Hinterradantrieb 34. Das Auto 14 hat über einem nicht dargestellten Fahrwerkrahmen eine Karosserie 36. Im Ausführungsbeispiel fährt das Auto 14 die Steigung 10 entlang einer Vorwärtsbewegungsrichtung 40 mit einer größer werdenden Geschwindigkeit v hinauf, d.h. mit einer Beschleunigung a.

An Stelle des Autos 14 kann die Ermittlung der Fahrzeugmasse m auch in einem anderen Elektrofahrzeug oder in einem Elektrohybridfahrzeug durchgeführt werden.

Das Auto 14 wird durch einen einzigen Elektromotor EM angetrieben. Der Elektromotor EM wird auch als Traktionsmotor bezeichnet und durch einen nicht dargestellten Akkumulator angetrieben, der in der Alltagssprache auch als Batterie bezeichnet wird, z.B. ein Lithiumionenakku. Es können aber auch nur die Vorderräder angetrieben werden. Alternativ können auch die Vorderräder und die Hinterräder angetrieben werden oder es werden zwei oder vier Radnabenmotoren eingesetzt.

Das Auto 14 kann ein Getriebe enthalten oder es kann ohne Getriebe ausgeführt sein. Das Getriebe kann ein vollautomatisches Getriebe, ein halbautomatisches Getriebe oder eine manuell betätigtes Getriebe sein. Das Getriebe kann eine Übersetzung ü haben, die bspw. im Bereich von 2 bis 10 liegt. Wird kein Getriebe verwendet, so ist ü gleich eins.

Der Elektromotor EM ist bspw. ein Synchronmotor, bspw. ein bürstenloser Synchronmotor mit Permanentmagneten am Rotor. Der Elektromotor EM wird von einem Inverter Inv (Umrichter) angesteuert, siehe Pfeil 42, wobei ein elektromagnetisches Drehfeld mit variabler Frequenz in den äußeren Ständerwicklungen bzw. Statorwicklungen erzeugt wird, wobei das Drehfeld den Rotor mitnimmt.

Eine Steuerung bzw. Regelung S/R steuert ihrerseits den Inverter Inv an, siehe Pfeil 44. Die Regelung S/R ist bspw. eine feldorientierte Regelung mit oder ohne Geber zusätzlich zu Stromsensoren, die vorzugsweise den Strom in den einzelnen Wicklungen des Elektromotors EM erfassen. Die feldorientierte Regelung kann eine Transformation der Statorströme auf Rotorströme enthalten, um die Regelung zu vereinfachen. Alternativ werden andere Regelungen und/oder andere Elektromotoren verwendet.

Zur Berechnung der Fahrzeugmasse m bzw. des Fahrzeuggewichts enthält das Auto 14 einen Prozessor P, der bspw. Teil einer zentralen Steuerung oder einer dezentralen Steuerung ist. Alternativ dient der Prozessor P ausschließlich oder hauptsächlich der Ermittlung der Fahrzeugmasse m oder des Fahrzeuggewichtes des Fahrzeugs 14. An Stelle eines Prozessors P können auch elektronische Schaltungen ohne Prozessor zur Ermittlung der Masse/Gewicht eingesetzt werden.

Der Prozessor P verwendet zur Ermittlung der Fahrzeugmasse m die Eingangsgröße Drehmoment M und die Eingangsgrößen 46 Beschleunigung a und der Neigungswinkel 16 bzw. alpha.

Das Motordrehmoment M wird vom Inverter Inv ausgegeben. Alternativ oder zusätzlich kann das Motordrehmoment M auch von der Regelung S/R ausgegeben werden, siehe Pfeil 56, bspw. aus einem Maschinenmodell des Elektromotors EM, das in der Regelung S/R nachgebildet wird.

Die Beschleunigung a kann ebenfalls von der Regelung S/R, siehe Pfeil 50, vom Inverter Inv, siehe Pfeil 52, oder auf andere Art ermittelt werden, siehe Pfeil 54, z.B. mit Hilfe eines handelsüblichen Beschleunigungssensors.

Der Neigungswinkel 16 kann über einen Neigungssensor, z.B. ähnlich einem Quecksilberschalter, oder auf andere Art ermittelt werden, z.B. unter Verwendung von GPS Daten, aktive Stoßdämpfer o.ä.

Der Prozessor P erzeugt als Ausgangsgröße 48 die Fahrzeugmasse m, die bspw. auf einer Anzeigeeinheit dem Fahrer angezeigt wird. Die Fahrzeugmasse kann für die in der Einleitung erläuterten Zwecke verwendet werden, d.h. z.B. ABS, ESP oder Reichweitenermittlung.

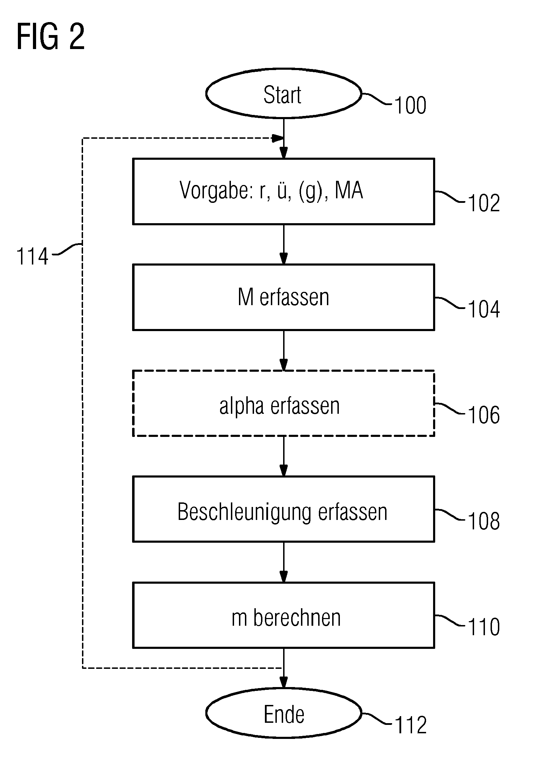

Die Ermittlung der Fahrzeugmasse m durch den Prozessor P wird unten an Hand der Figur 2 für einen Fall I und für einen Fall II noch näher erläutert.

Für den Fall I gilt:

- Neigungswinkel alpha ungleich Null,
- Geschwindigkeit v ungleich Null,
- Beschleunigung a ungleich Null, und
- die Geschwindigkeit v ist vorzugsweise kleiner als eine Geschwindigkeit VG von bspw. 30 km/h (Kilometer pro Stunde).

Für den Fall II gilt:

- Neigungswinkel alpha gleich oder annähernd Null,
- Geschwindigkeit v ungleich Null,
- Beschleunigung a ungleich Null, und
- die Geschwindigkeit v ist vorzugsweise kleiner als eine Geschwindigkeit VG von bspw. 30 km/h (Kilometer pro Stunde).

Die Figur 2 zeigt Verfahrensschritte beim Ermitteln der Fahrzeugmasse m des Elektrofahrzeugs 14 oder eines anderen Elektrofahrzeugs. Zunächst wird der oben angesprochene Fall I erläutert, d.h. es gibt eine Steigung 10 mit einer Neigung größer als ein Prozent bzw. mit einen Neigungswinkel alpha ungleich Null bzw. größer als 1 Winkelgrad.

Das Verfahren beginnt in einem Verfahrensschritt 100. Die Verfahrensschritte werden im Folgenden auch kurz als Schritt bezeichnet. In einem dem Schritt 100 folgenden Schritt 102 werden konstante Größen vorgegeben und bspw. als digitale Daten in einem digitalen Datenspeicher gespeichert:

- der Radius r des Hinterrades 32,
- die Übersetzung ü des Getriebes des Elektrofahrzeugs 14, alternativ zu r und ü kann auch das Verhältnis ü/r gespeichert werden,
- die Erdfallbeschleunigung g, und
- ggf. die Anzahl MA der zu berücksichtigenden Elektromotoren EM, wobei MA bei nur einem Elektromotor EM im Fahrzeug 14 gleich 1 ist.

In einem nächsten Schritt 104 wird das Motordrehmoment M des Elektromotors EM erfasst, wie oben an Hand der Figur 1 erläutert. Danach, davor oder gleichzeitig wird der Neigungswinkel alpha bzw. die prozentuale Neigung der Steigung 10 in einem Schritt 106 erfasst, wie oben an Hand der Figur 1 erläutert.

In einem weiteren Schritt 108 wird parallel zu oder nach den Schritten 104 bzw. 106 die Beschleunigung a erfasst, wie ebenfalls oben an Hand der Figur 1 erläutert worden ist.

Ein einem Schritt 110 berechnet der Prozessor P die Fahrzeugmasse m bzw. das Fahrzeuggewicht, bspw. unter Verwendung der in der Einleitung genannten Formel (1).

Danach kann das Verfahren in einem Schritt 112 beendet werden, wobei die berechnete Fahrzeugmasse m bspw. an andere Einheiten des Fahrzeugs 14 weiter gegeben wird.

Alternativ wird das Verfahren mehrmals wiederholt, siehe Pfeil 114, bspw. um eine Mittelwertbildung der Fahrzugmasse m über bspw. immer zwei, drei oder mehr als drei Erfassungswerte durchzuführen. Es kann auch eine Filterung der berechneten Werte durchgeführt werden, insbesondere eine Glättung.

Das Verfahren kann periodisch durchgeführt werden. Alternativ oder zusätzlich kann das Verfahren auch durch äußere Ereignisse getriggert werden, bspw. Veränderung der Steigung, Motorstart usw.

Im Fall II, d.h. keine Steigung/Neigung bzw. Neigungswinkel alpha gleich Null, gibt es die folgenden Abweichungen oder Besonderheiten:

- im Verfahrensschritt 102 wird die Erdfallbeschleunigung g nicht vorgegeben bzw. ermittelt,
- der Schritt 106 wird nicht ausgeführt,
- im Schritt 110 verwendet der Prozessor P bspw. die in der Einleitung angegebene Formel (2).

Im Übrigen wird auch das Verfahren für den Fall II so durchgeführt, wie es oben für den Fall I erläutert worden ist.

Die Reihenfolge der Verfahrensschritte 100 bis 112 kann auch von der in der Figur 2 dargestellten Reihenfolge abweichen.

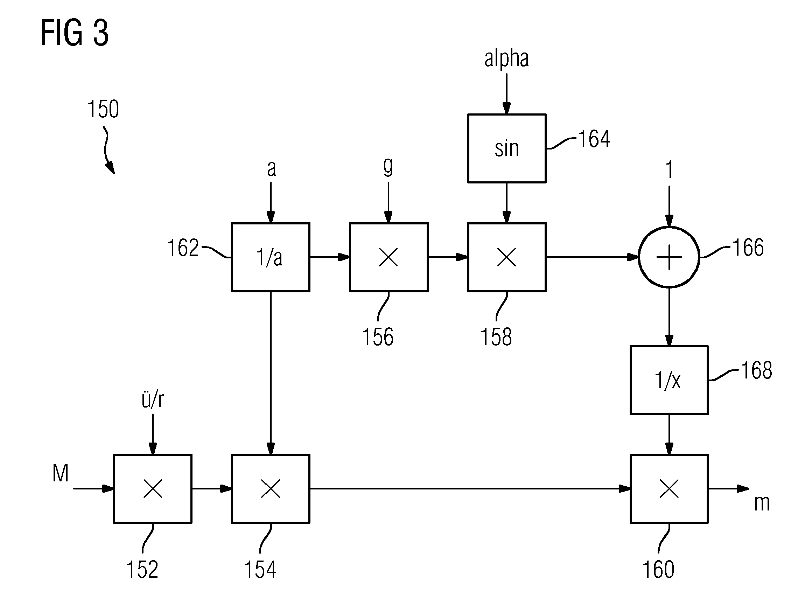

Der Prozessor P kann bei der Durchführung des Berechnungsverfahrens für den Fall I Funktionen der unten an Hand der Figur 3 erläuterten Einheiten erbringen. Auch der Fall II wird unten an Hand der Figur 3 weiter erläutert.

Die Figur 3 zeigt eine Berechnungseinheit 150 des Elektrofahrzeugs 14 oder eines anderen Elektrofahrzeugs zur Berechnung der Fahrzeugmasse m bzw. zur Berechnung des Fahrzeuggewichts G.

Für den Fall I werden bspw. alle in der Figur 3 gezeigten Einheiten in der Berechnungseinheit 150 und ggf. auch noch weitere Einheiten verwendet, d.h.:

- eine Multipliziereinheit 152,
- eine eingangsseitig mit einem Ausgang der Multipliziereinheit 152 verbundene Multipliziereinheit 154,
- eine Kehrwertermittlungseinheit 162,
- eine eingangsseitig mit einem Ausgang der Kehrwertermittlungseinheit 162 verbundene Multipliziereinheit 156,
- eine eingangsseitig mit einem Ausgang der Multipliziereinheit 156 verbundene Multipliziereinheit 158,
- eine Sinusermittlungseinheit 164, deren Ausgang mit einem Eingang der Multipliziereinheit 158 verbunden ist,
- eine Addiereinheit 160, die eingangsseitig mit einem Ausgang der Multipliziereinheit 158 verbunden ist,
- eine Kehrwertermittlungseinheit 168, deren Eingang mit dem Ausgang der Addiereinheit 160 verbunden ist, und
- eine eingangsseitig mit einem Ausgang der Kehrwertermittlungseinheit 168 verbundene Multipliziereinheit 160.

Die Multipliziereinheit 152 erhält als Eingangsgrößen das Motordrehmoment M des Elektromotors EM sowie die Größe Übersetzung ü geteilt durch den Radius r.

Die Multipliziereinheit 154 ist außerdem eingangsseitig mit dem Ausgang der Kehrwertermittlungseinheit 162 verbunden. Am Eingang der Kehrwertermittlungseinheit 162 wird die Beschleunigung a eingeben.

Am oben noch nicht erwähnten Eingang der Multipliziereinheit 156 wird die Erdfallbeschleunigung g eingegeben, d.h. bspw. der Wert 9,81 Meter pro Quadratsekunde.

Am Eingang der Sinusermittlungseinheit 164 wird der Neigungswinkel alpha bzw. die prozentuale Neigung eingegeben.

An dem oben noch nicht erwähnten Eingang der Addiereinheit 166 wird der Wert 1 eingegeben.

Außerdem ist der Ausgang der Multipliziereinheit 154 mit dem oben noch nicht erwähnten Eingang der Multipliziereinheit 160 verbunden.

Somit realisiert die Berechnungseinheit 150 die Berechnung der Fahrzeugmasse m gemäß der Formel (1).

Im Fall II lässt sich die Formel (2) ermitteln, wenn nur die Multipliziereinheiten 152 und 154 sowie die Kehrwertermittlungseinheit 162 verwendet werden. Am Ausgang der Multipliziereinheit 154 wird dann direkt der Wert der Fahrzeugmasse m ausgegeben.

In beiden Fällen I und II können die Funktionen aller Einheiten durch den Prozessor P bzw. durch einen anderen Prozessor erbracht werden. Es können auch Tabellen (look up) verwendet werden, insbesondere für die Sinusermittlungseinheit 164 oder für die Kehrwertermittlungseinheit(en) 162 bzw. 168. Alternativ werden elektronische Schaltungen ohne Prozessor verwendet, d.h. analoge Multiplizier und Addierer bzw. nichtlineare Bauelemente zum Erbringen der Funktionen der Kehrwertermittlungseinheiten 162 und 168. Weiterhin können auch programmierbare Logikschaltkreise verwendet werden, wie FPGA (Field Programmable Gate Array) o.ä.

Die in der Figur 3 gezeigten Einheiten können auch anders angeordnet werden oder es können andere Einheiten verwendet werden zur Berechnung der Fahrzeugmasse m gemäß der Formel (1) bzw. (2) bzw. gemäß anderer Formeln.

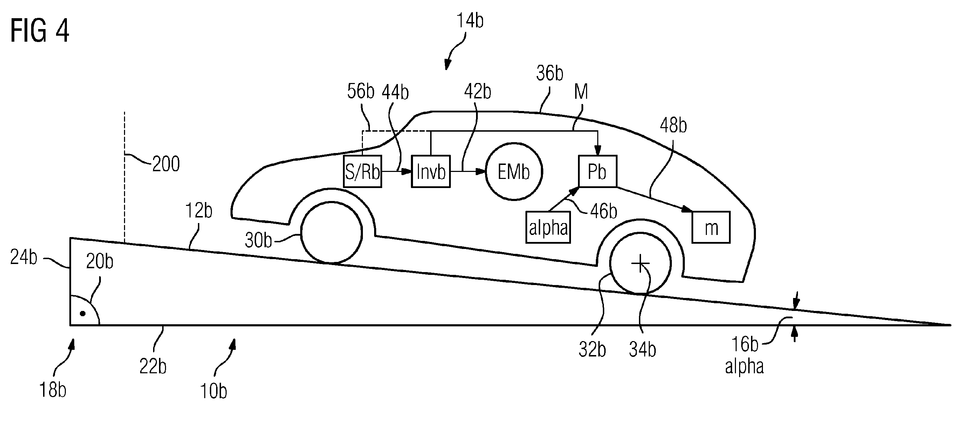

Die Figur 4 zeigt ein weiteres Elektrofahrzeug 14b, bei dem die Fahrzeugmasse m während des Haltens/Parkens an einer Steigung ermittelt wird. In der Figur 4 sind gezeigt:

- eine Steigung 10b, die der Steigung 10 entspricht,
- eine Fahrbahn 12b, die der Fahrbahn 12 entspricht,
- ein Auto 14b, das bis auf die im Folgenden im Zusammenhang mit der Berechnung des Fahrzeuggewichts m erläuterten Abweichungen dem Auto 14 entspricht,
- ein Neigungswinkel 16b, alpha, der dem Neigungswinkel 16 entspricht,
- ein rechtwinkliges Dreieck 18b, das dem rechtwinkliges Dreieck 18 entspricht,
- ein rechter Winkel 20b, der dem rechten Winkel 20 entspricht,
- eine Ankathete 22b, die der Ankathete 22 entspricht,
- eine Gegenkathete 24b, die der Gegenkathete 24 entspricht,
- ein Vorderrad 30b, das dem Vorderrad 30 entspricht,
- ein Hinterrad 32b, das dem Hinterrad 32 entspricht,
- ein Hinterradantrieb 34b, der dem Hinterradantrieb 34 entspricht,
- eine Karosserie 36b, die der Karosserie 36 entspricht,
- ein Elektromotor EMb, der dem Elektromotor EM entspricht,
- ein Inverter Invb, der dem Inverter Inv entspricht,
- eine Steuerung/Regelung S/Rb, die der Steuerung/Regelung S/R entspricht, und
- ein Prozessor Pb, der dem Prozessor P entspricht.

Das Motordrehmoment M ist eine Eingangsgröße für den Prozessor Pb und kommt vom Inverter Invb oder von der Steuerung/Regelung S/Rb.

Eine Eingangsgröße 46b ist der Neigungswinkel 16b. Eine der Ausgangsgröße 48 entsprechende Ausgangsgröße 48b betrifft die Fahrzeugmasse m.

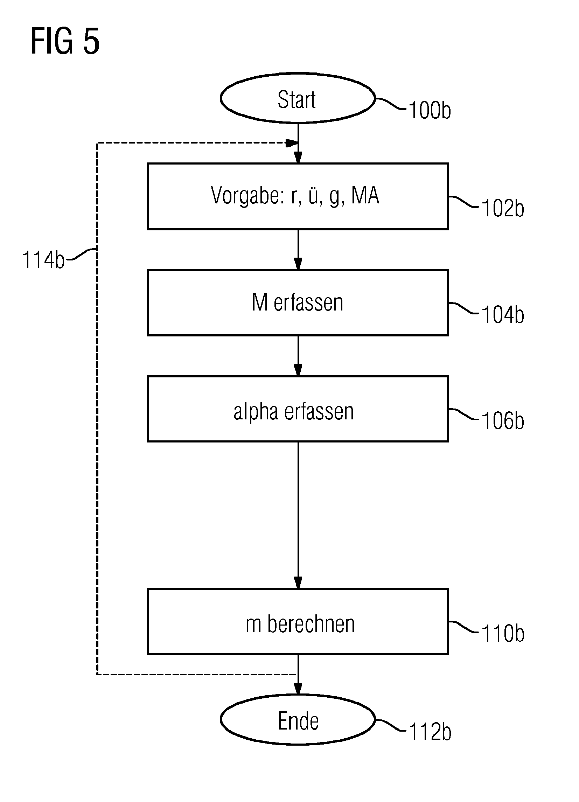

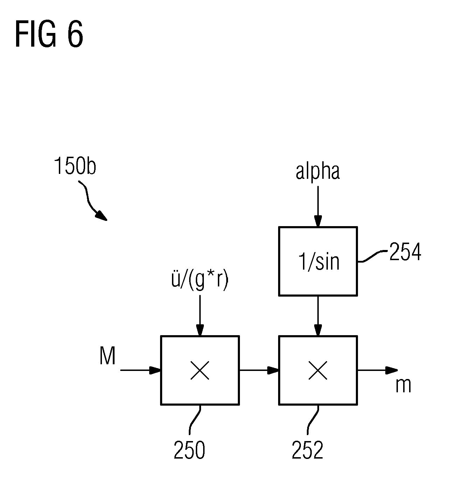

Bei dem in der Figur 4 gezeigten Ausführungsbeispiel hält das Fahrzeug 14b an der Steigung 10b an, bspw. nur kurz während der Fahrt auf Grund eines optionalen Hindernisses 200 oder beim Parken. Dennoch kann die Fahrzeugmasse m bzw. das Fahrzeuggewicht berechnet werden, was unten an Hand der Figuren 5 und 6 noch näher erläutert wird. Es wird demnach keine Beschleunigung a in die Berechnung einbezogen. Im Übrigen gelten die Ausführungen zur Figur 1 aber auch für das in der Figur 4 dargestellte Ausführungsbeispiel, insbesondere auch hinsichtlich der oben erwähnten Abwandlungen.

Die Ermittlung der Fahrzeugmasse m durch den Prozessor Pb wird unten an Hand der Figur 5 für einen Fall III noch näher erläutert.

Für den Fall III gilt:

- Neigungswinkel alpha ungleich Null,
- Geschwindigkeit v gleich Null, und
- Beschleunigung a gleich Null.

Die Figur 5 zeigt Verfahrensschritte beim Ermitteln der Fahrzeugmasse m des weiteren Elektrofahrzeugs 14b. Die Steigung 10b hat bspw. eine Neigung größer als ein Prozent bzw. einen Neigungswinkel alpha ungleich Null bzw. größer als 1 Winkelgrad.

Das Verfahren beginnt in einem Verfahrensschritt 100b. Die Verfahrensschritte werden im Folgenden auch kurz als Schritt bezeichnet. In einem dem Schritt 10b folgenden Schritt 102b werden konstante Größen vorgegeben und bspw. als digitale Daten in einem digitalen Datenspeicher gespeichert:

- der Radius r des Hinterrades 32b,
- die Übersetzung ü des Getriebes des Elektrofahrzeugs 14b,
- die Erdfallbeschleunigung g, und
- ggf. die Anzahl MA der zu berücksichtigenden Elektromotoren EMb, wobei MA bei einem Elektromotor EMb gleich 1 ist.

Ggf. können auch mehrerer dieser Werte zu einem Wert zusammengefasst werden, wie unten näher erläutert ist.

In einem nächsten Schritt 104b wird das Motordrehmoment M des Elektromotors EMb erfasst, wie oben an Hand der Figur 1 erläutert. Danach, davor oder gleichzeitig wird in einem Schritt 106b der Neigungswinkel alpha bzw. die Neigung der Steigung 10b erfasst, wie oben an Hand der Figur 1 erläutert.

In einem Schritt 110b, der nach dem Schritt 106b folgt, berechnet der Prozessor Pb die Fahrzeugmasse m bzw. das Fahrzeuggewicht, bspw. unter Verwendung der in der Einleitung genannten Formel (3). Somit fehlt ein dem Schritt 108 entsprechender Schritt 108b

Danach kann das Verfahren in einem Schritt 112b beendet werden, wobei die berechnete Fahrzeugmasse m bspw. an andere Einheiten des Fahrzeugs 14b weiter gegeben wird.

Alternativ wird das Verfahren mehrmals wiederholt, siehe Pfeil 114b, bspw. um eine Mittelwertbildung der Fahrzugmasse m über bspw. immer zwei, drei oder mehr als drei Erfassungswerte durchzuführen. Es kann auch eine Filterung der berechneten Werte durchgeführt werden, insbesondere eine Glättung.

Das Verfahren kann periodisch durchgeführt werden. Alternativ oder zusätzlich kann das Verfahren gemäß der Figur 5 auch durch äußere Ereignisse getriggert werden, bspw. Veränderung der Steigung, Motorstart usw.

Die Reihenfolge der Verfahrensschritte 100b bis 112b kann auch von der in der Figur 5 dargestellten Reihenfolge abweichen.

Der Prozessor Pb kann bei der Durchführung des Berechnungsverfahrens Funktionen der unten an Hand der Figur 6 erläuterten Einheiten erbringen.

Die Figur 6 zeigt eine Berechnungseinheit 150b des weiteren Elektrofahrzeugs 14b zur Berechnung der Fahrzeugmasse m. Die Berechnungseinheit 150b enthält bzw. besteht aus:

- eine Multipliziereinheit 250,
- eine eingangsseitig mit dem Ausgang der Multipliziereinheit 250 verbundenen Multipliziereinheit 252, und
- eine Teilberechnungseinheit 254, deren Ausgang mit dem anderen Eingang der Multipliziereinheit 252 verbunden ist.

Die Multipliziereinheit 250 erhält als Eingabegrößen das Motordrehmoment M des Elektromotors EMb sowie die Größe Übersetzung ü geteilt durch den mit der Erdfallbeschleunigung g multiplizierten Radius r.

Am Eingang der Teilberechnungseinheit 254 wird der Neigungswinkel 16b bzw. alpha eingegeben. Die Teilberechnungseinheit 254 berechnet den Kehrwert des Sinus zum Neigungswinkel alpha.

Am Ausgang der Multipliziereinheit 252 wird der Wert der Fahrzeugmasse m ausgegeben.

Somit realisiert die Berechnungseinheit 150b die Berechnung der Fahrzeugmasse m gemäß der Formel (3).

Die Funktionen aller in der Figur 6 gezeigten Einheiten können durch den Prozessor Pb bzw. einen anderen Prozessor erbracht werden. Es können auch Tabellen (look up) verwendet werden, insbesondere für die Teilberechnungseinheit 254. Alternativ werden elektronische Schaltungen ohne Prozessor verwendet, d.h. analoge Multiplizier bzw. nichtlineare Bauelemente zum Erbringen der Funktionen der Teilberechnungseinheit 254. Weiterhin können auch programmierbare Logikschaltkreise verwendet werden, wie FPGA (Field Programmable Gate Array) o.ä.

Die in der Figur 6 gezeigten Einheiten können auch anders angeordnet werden oder es können andere Einheiten verwendet werden zur Berechnung der Fahrzeugmasse m gemäß der Formel (3) bzw. gemäß anderer Formeln.

Alle drei Fälle I, II und III bzw. zwei dieser Fälle I und II bzw. I und III bzw. II und III können auch in einem Fahrzeug 14, 14b bzw. einem anderen Fahrzeug kombiniert werden. Alternativ ist nur einer der Fälle I, II bzw. III in einem Fahrzeug realisiert.

Die Ausführungsbeispiele sind nicht maßstabsgetreu und nicht beschränkend. Abwandlungen im Rahmen des fachmännischen Handelns sind möglich. Obwohl die Erfindung im Detail durch das bevorzugte Ausführungsbeispiel näher illustriert und beschrieben worden ist, ist die Erfindung nicht durch die offenbarten Beispiele eingeschränkt und andere Variationen können vom Fachmann hieraus abgeleitet werden, ohne den Schutzumfang der Erfindung zu verlassen. Die in der Einleitung genannten Weiterbildungen und Ausgestaltungen können untereinander kombiniert werden. Die in der Figurenbeschreibung genannten Ausführungsbeispiele können ebenfalls untereinander kombiniert werden. Weiterhin können die in der Einleitung genannten Weiterbildungen und Ausgestaltungen mit den in der Figurenbeschreibung genannten Ausführungsbeispielen kombiniert werden.

**Patentansprüche**

1.  Verfahren zum Ermitteln der Fahrzeugmasse (m) oder des Fahrzeuggewichts eines Elektrofahrzeugs (14, 14b) oder eines Elektrohybridfahrzeugs,

    a) wobei das Motordrehmoment (M) eines Elektromotors (EM, EMb) ermittelt wird,
    b) wobei eine Beschleunigung (a) des Fahrzeugs (14, 14b) und/oder ein Neigungswinkel (16, alpha) oder eine Neigung des Fahrzeugs (14, 14b) oder der Fahrbahn (12, 12b), auf der das Fahrzeug (14, 14b) fährt, ermittelt wird, und
    c) wobei unter Verwendung des Motordrehmoments (M), der Beschleunigung (a) und des Neigungswinkels (16, alpha) oder der Neigung,

    oder unter Verwendung des Motordrehmoments (M) und der Beschleunigung (a),
    oder unter Verwendung des Motordrehmoments (M) und des Neigungswinkels (16, alpha) oder der Neigung
    die Fahrzeugmasse (m) oder das Fahrzeuggewicht ermittelt wird.

2.  Verfahren nach Anspruch 1, wobei das Motordrehmoment (M) des Elektromotors (EM, EMb) von einem Inverter (Inv, Invb) zum Ansteuern des Elektromotors (EM, EMb) ausgegeben wird, oder wobei das Motordrehmoment (M) des Elektromotors (EM, EMb) aus mindestens einem Motorstrom ermittelt wird, vorzugsweise aus einem Motorstrom, der oder dessen Wert in einem Inverter (Inv, Invb) zum Ansteuern des Elektromotors (EM, EMb) verfügbar ist.

3.  Verfahren nach Anspruch 1 oder 2, wobei der Elektromotor (EM, EMb) ein Synchronmotor, insbesondere ein permanenterregter Synchronmotor, ein Asynchronmotor oder ein Gleichstrommotor ist.

4.  Verfahren nach einem der vorhergehenden Ansprüche, wobei die Fahrzeugmasse (m) oder das Fahrzeuggewicht abhängig von den folgenden Größen berechnet wird:

    dem Motordrehmoment (M), vorzugsweise einem Übersetzungsverhältnis (ü) eines Getriebes, wobei bei einem Radnabenmotor vorzugsweise ein Übersetzungsverhältnis (ü) gleich 1 verwendet wird, einem Radius (r) eines Rades (32, 32b) des Fahrzeugs (14, 14b), vorzugsweise der Erdfallbeschleunigung (g), der Beschleunigung (a) des Fahrzeugs (14, 14b) und dem Neigungswinkel (16, alpha) oder der Neigung.

5.  Verfahren nach Anspruch 4, wobei die Fahrzeugmasse (m) nach der folgenden Formel berechnet wird:

$$m = M * ü / (r * a (g/a * sin\ alpha + 1)),$$

    wobei M das Motordrehmoment, ü das Übersetzungsverhältnis, r der Radius, g die Erdfallbeschleunigung, a die Beschleunigung und alpha der Neigungswinkel (16) sind.

6.  Verfahren nach einem der Ansprüche 1 bis 3, wobei die Fahrzeugmasse (m) oder das Fahrzeuggewicht abhängig von den folgenden Größen berechnet wird:

    dem Motordrehmoment (M), vorzugsweise einem Übersetzungsverhältnis (ü) eines Getriebes, wobei bei einem Radnabenmotor vorzugsweise ein Übersetzungsverhältnis (ü) gleich 1 verwendet wird, einem Radius (r) eines Rades (32, 32b) des Fahrzeugs (14, 14b) und der Beschleunigung (a) des Fahrzeugs (14, 14b).

7.  Verfahren nach Anspruch 6, wobei die Fahrzeugmasse (m) nach der folgenden Formel berechnet wird:

$$m = M * ü / (r * a),$$

wobei M das Motordrehmoment, ü das Übersetzungsverhältnis, r der Radius und a die Beschleunigung sind, und wobei vorzugsweise geprüft wird, dass sich das Fahrzeug (14, 14b) auf einer ebenen Fahrbahn (12, 12b) oder auf einer Fahrbahn (12, 12b) mit einer Steigung oder mit einem Gefälle kleiner als drei Prozent oder kleiner als 1 Prozent bewegt.

8.  Verfahren nach einem der Ansprüche 4 bis 7, wobei die Fahrzeugmasse (m) oder das Fahrzeuggewicht bei einer Fahrzeuggeschwindigkeit (v) im Bereich von einem Kilometer pro Stunde bis zu 1, 5, 10, 20 oder 30 Kilometer pro Stunde oder im Bereich von 5 Kilometern pro Stunde bis zu 30 Kilometer pro Stunde ermittelt wird.

9.  Verfahren nach einem der Ansprüche 4 bis 7, wobei die Fahrzeugmasse (m) oder das Fahrzeuggewicht bei einer Fahrzeuggeschwindigkeit (v) größer als 30 Kilometer pro Stunde oder größer als 50 Kilometer pro Stunde ermittelt wird.

10. Verfahren nach einem der Ansprüche 1 bis 3, wobei die Fahrzeugmasse (m) oder das Fahrzeuggewicht abhängig von den folgenden Größen ermittelt wird:

dem Motordrehmoment (M), vorzugsweise einem Übersetzungsverhältnis (ü) eines Getriebes, wobei bei einem Radnabenmotor vorzugsweise ein Übersetzungsverhältnis (ü) gleich 1 verwendet wird, einem Radius (r) eines Rades (32, 32b) des Fahrzeugs (14, 14b), vorzugsweise der Erdfallbeschleunigung (g) und dem Neigungswinkel (16, alpha) oder der Neigung,
vorzugsweise wird die Fahrzeugmasse (m) nach der folgenden Formel ermittelt:

$$m = M * ü / (r * g * sin\ alpha),$$

wobei M das Motordrehmoment, ü das Übersetzungsverhältnis, r der Radius, g die Erdfallbeschleunigung und alpha der Neigungswinkel (16) sind.

11. Verfahren nach Anspruch 10, wobei die Fahrzeugmasse (m) oder das Fahrzeuggewicht bei Stillstand des Fahrzeugs (14, 14b) an einer Steigung (10, 10b) oder an einem Gefälle gemessen wird, wobei die Neigung einen Betrag hat, der vorzugsweise größer als 1 Prozent, größer als 3 Prozent oder größer als 5 Prozent ist.

12. Verfahren nach Anspruch 10 oder 11, wobei der Elektromotor (EM, EMb) im Stillstand ein Halten oder Anfahren des Fahrzeugs (14, 14b) am Hang durchführt oder unterstützt oder wobei der Elektromotor (EM, EMb) im Stillstand eine Bremsfunktion des Fahrzeugs (14, 14b) an einem Hang (10, 10b) vollständig oder teilweise übernimmt.

13. Verfahren nach einem der vorhergehenden Ansprüche, wobei die Fahrzeugmasse (m) oder das Fahrzeuggewicht verwendet wird, um eine, mehrere oder alle der folgenden Maßnahmen durchzuführen:

Ermitteln der Reichweite des Fahrzeugs,
Einstellen eines Antiblockiersystems,
Einstellen einer elektronischen Stabilitätsregelung,
Einstellen der Scheinwerferlichtkegelhöhe,
Einstellen der Lenkung,
Ausgabe eines Warnhinweises an den Fahrer beim Überschreiten eines Höchstwertes der Fahrzeugmasse (m) oder des Fahrzeuggewichts,
Begrenzung der Höchstgeschwindigkeit,
Außerbetriebnahme des Fahrzeugs (14, 14b),
Verändern der von einem Gaspedal erzeugten Gegenkraft,
Verändern der von einem Bremspedal erzeugten Gegenkraft,
Vorgabe eines Solldrehmoments (M) für den Elektromotor (EM, EMb),
Vorgabe einer Solldrehzahl für den Elektromotor (EM, EMb).

14. Vorrichtung (150, 150b), insbesondere zum Durchführen eines Verfahrens nach einem der vorhergehenden Ansprüche, wobei die Vorrichtung (150, 150b) enthält:

eine Einheit zum Ermitteln des Drehmoments (M) eines Elektromotors (EM, EMb),

eine Einheit zum Ermitteln der Beschleunigung (a) und/oder des Neigungswinkels (16, alpha) oder einer Neigung eines durch den Elektromotor (EM, EMb) angetriebenen Fahrzeugs (14, 14b),
und eine Ermittlungseinheit (150 bis 168; 250 bis 254), die eingangsseitig mit einem Ausgang der Einheit zur Ermittlung des Drehmoments (M) und

a) mit der Einheit zum Ermitteln der Beschleunigung (a) und des Neigungswinkels (16, alpha) oder der Neigung, oder
b) mit der Einheit zum Ermitteln der Beschleunigung (a), oder
c) mit der Einheit zum Ermitteln des Neigungswinkels (16, alpha) oder der Neigung

verbunden ist und die die Fahrzeugmasse (m) oder das Fahrzeuggewicht des Fahrzeugs (14, 14b) ermittelt.

15. Fahrzeug (14, 14b) mit einem Elektromotor (EM, EMb), wobei das Fahrzeug (14, 14b) die Vorrichtung (150, 150b) nach Anspruch 14 enthält.

# FIG 1

delta v

alpha = 0
oder alpha
ungleich 0

# FIG 2

```
                    ┌──────────┐
                   ( Start )────── 100
                    └────┬─────┘
                         │
        ┌────────────────▼──────────────┐
        │   Vorgabe: r, ü, (g), MA      │──── 102
        └────────────────┬──────────────┘
                         │
        ┌────────────────▼──────────────┐
  114   │        M erfassen             │──── 104
        └────────────────┬──────────────┘
                         │
        ┌ ─ ─ ─ ─ ─ ─ ─ ─▼─ ─ ─ ─ ─ ─ ─ ┐
        │        alpha erfassen         │──── 106
        └ ─ ─ ─ ─ ─ ─ ─ ─┬─ ─ ─ ─ ─ ─ ─ ┘
                         │
        ┌────────────────▼──────────────┐
        │   Beschleunigung erfassen     │──── 108
        └────────────────┬──────────────┘
                         │
        ┌────────────────▼──────────────┐
        │        m berechnen            │──── 110
        └────────────────┬──────────────┘
                         │
                    ┌────▼─────┐
                   ( Ende )────── 112
                    └──────────┘
```

FIG 3

EP 2 896 544 A2

FIG 4

# FIG 5

```
                          ┌─────────────┐
                          │    Start    │────── 100b
                          └─────────────┘
       ┌ ─ ─ ─ ─ ─ ─ ─ ─ ─ ─ ─ ─│
       ╎                         ▼
       ╎              ┌──────────────────────┐
       ╎              │  Vorgabe: r, ü, g, MA │───── 102b
       ╎              └──────────────────────┘
       ╎                         │
114b ──╎                         ▼
       ╎              ┌──────────────────────┐
       ╎              │      M erfassen       │───── 104b
       ╎              └──────────────────────┘
       ╎                         │
       ╎                         ▼
       ╎              ┌──────────────────────┐
       ╎              │     alpha erfassen    │───── 106b
       ╎              └──────────────────────┘
       ╎                         │
       ╎                         ▼
       ╎              ┌──────────────────────┐
       ╎              │      m berechnen      │───── 110b
       ╎              └──────────────────────┘
       └ ─ ─ ─ ─ ─ ─ ─ ─ ─ ─ ─ ─ │
                                  ▼
                          ┌─────────────┐
                          │    Ende     │────── 112b
                          └─────────────┘
```

# FIG 6

150b

alpha

ü/(g*r)

| 1/sin |  254

M → | × |  250 → | × |  252 → m